# EUROPÄISCHE PATENTANMELDUNG

(11) **EP 1 569 306 A1**
(43) Veröffentlichungstag der Anmeldung: **31.08.2005**
(21) Anmeldenummer: 05000214.6
(22) Anmeldetag: 07.01.2005
(51) Int. Cl.: H01R 13/74, H01R 13/639, H05K 5/02

(54) **Schnittstellengehäuse**

(30) Priorität: 24.02.2004 DE 202004002624 U
(71) Anmelder: Weidmüller Interface GmbH & Co. KG, 32758 Detmold (DE)
(72) Erfinder: Gottardo, Daniel, 8232 Merishausen (CH); Sigg, Daniel, 8232 Merishausen (CH); Bruland, Martina, 32694 Dörentrup (DE)
(74) Vertreter: Dantz, Jan Henning

(57) **Zusammenfassung**

Schnittstellengehäuse (1) mit einem Gehäusegrundteil (2), einem an dem Gehäusegrundteil (2) schwenkbar angeordneten Deckelteil (3), einer wannenartigen Vertiefung (5) im Gehäusegrundteil (2) zur Aufnahme von Stecker- und/oder Buchsenteilen (10-12) elektrischer Steckvorrichtungen, welche wenigstens eine Wandung der Vertiefung (5) durchsetzen, und mit einen die wannenartige Vertiefung (5) ringsum umgebenden, ebenen Flanschabschnitt (6), auf dem das Deckelteil (3) in seinem äußeren Umfangsbereich (7) ebenfalls flanschartig flächig aufliegt, wobei die Vertiefung (5) wenigstens eine oder mehrere Wandungen (14, 15) aufweist, die spitzwinklig in einem Winkel kleiner als 90° zur Flanschebene ausgerichtet sind und in die das wenigstens eine Stecker- und/oder Buchsenteil (10 -12) eingebracht ist.

## Beschreibung

Die Erfindung betrifft ein Schnittstellengehäuse mit einem Gehäusegrundteil, einem an dem Gehäusegrundteil schwenkbar angeordneten Deckelteil, einer wannenartigen Vertiefung im Gehäusegrundteil zur Aufnahme von Stecker- und/oder Buchsenteilen elektrischer Steckvorrichtungen.

Derartige Schnittstellengehäuse sind an sich bekannt. Sie können beispielsweise an Durchbrüchen einer Schaltschranktür oder dergleichen befestigt sein und werden bevorzugt in einer hohen Schutzart ausgebildet.

Dabei besteht Bedarf nach einer robusten und dennoch kompakten, preisgünstigen Ausgestaltung eines derartigen Schnittstellengehäuses mit der Möglichkeit zur einfache Realisierung einer hohen Schutzklasse.

Die Lösung dieses Problems ist die Aufgabe der Erfindung.

Die Erfindung löst diese Aufgabe durch den Gegenstand des Anspruchs 1. Danach weist der Gehäusegrundteil einen die wannenartige Vertiefung ringsum umgebenden, ebenen Flanschabschnitt auf, auf dem der Deckelteil in seinem äußeren Umfangsbereich ebenfalls flanschartig flächig aufliegt und die Vertiefung weist wenigstens eine oder mehrere Wandungen auf, die spitzwinklig in einem Winkel kleiner als 90° zur Flanschebene ausgerichtet sind und in die wenigstens ein Stecker- und/oder Buchsenteil eingebracht ist, welches die Wandung durchsetzt.

Die schräge Anordnung der Wandungen erlaubt es, die Bautiefe relativ zur Flanschebene gering zu halten und dabei dennoch auch sperrigere Steckerteile oder sonstige Einrichtungen unterzubringen. Der Flansch ermöglicht dabei auf einfache Weise eine abgedichtete Bauform und schafft die Voraussetzung zur Realisierung einer hohen Schutzklasse (z.B. IP 65). Bevorzugt wird die Vertiefung zur Aufnahme eines Memorysticks - in schräger Anordnung an einer der spitzwinklig zur Flanschebene ausgerichteten Wände - ausgelegt.

Bevorzugt sind die von den Stecker- und/oder Buchsenteil durchsetzten Wandungen zur Erzielung einer besonders kompakten und stabilen Bauart in einem Winkel zwischen 30 und 60° zur Flanschebene ausgerichtet. Dabei besteht die Möglichkeit dazu, direkt in die Wandungen auch Kupplungsteile verschiedenster Art, insbesondere RJ45 oder USB-Kupplungsteile zu integrieren.

In Hinsicht auf die Ausbildung in hoher Schutzklasse ist insbesondere auch der bevorzugt vorgesehene Dichtring in einer Ringnut im Flansch oder Deckelteil als vorteilhaft zu erwähnen, um den Bereich zwischen dem Flanschabschnitt und dem Deckelteil abzudichten.

Nachfolgend wird die Erfindung unter Bezug auf die Zeichnung anhand von Ausführungsbeispielen näher erläutert. Es zeigt:
Fig. 1 eine Frontansicht eines Schnittstellengehäuses;
Fig. 2 eine Seitenansicht des Schnittstellengehäuses aus Fig. 1;
Fig. 3 eine Schnittansicht des Schnittstellengehäuses aus Fig. 1;
Fig. 4 eine perspektivische Ansicht des Schnittstellengehäuses aus Fig. 1;
Fig. 5 eine Draufsicht auf das Schnittstellengehäuse aus Fig. 1; und
Fig. 6 eine perspektivische Ansicht des Schnittstellengehäuses aus Fig. 1 im geöffneten Zustand.

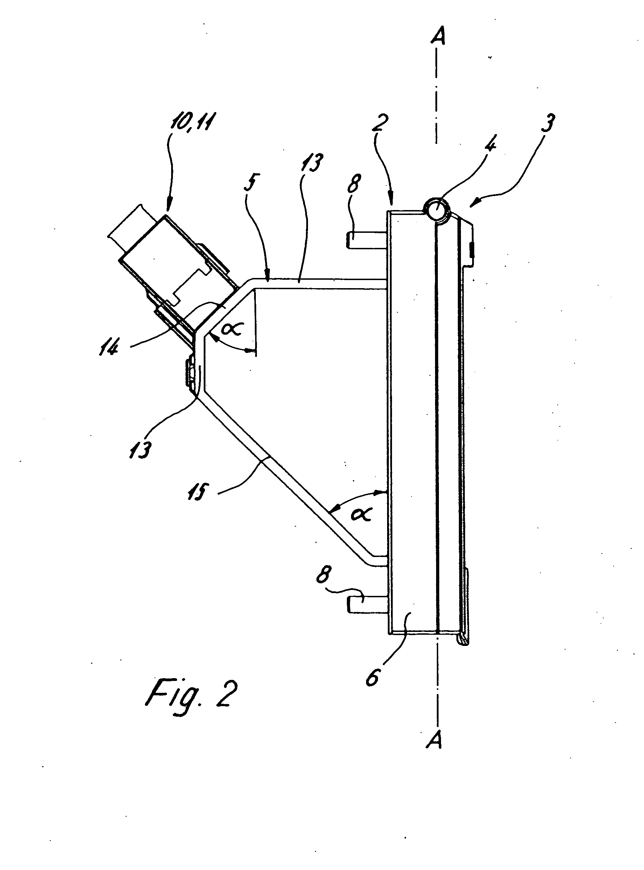

Fig: 1 - 6 zeigen verschiedene Ansichten eines erfindungsgemäßen Schnittstellengehäuses 1 mit einem Gehäusegrundteil 2, an dem ein Deckelteil 3 mit Hilfe eines Scharniers 4 - siehe Fig. 2 - schwenkbar angeordnet ist.

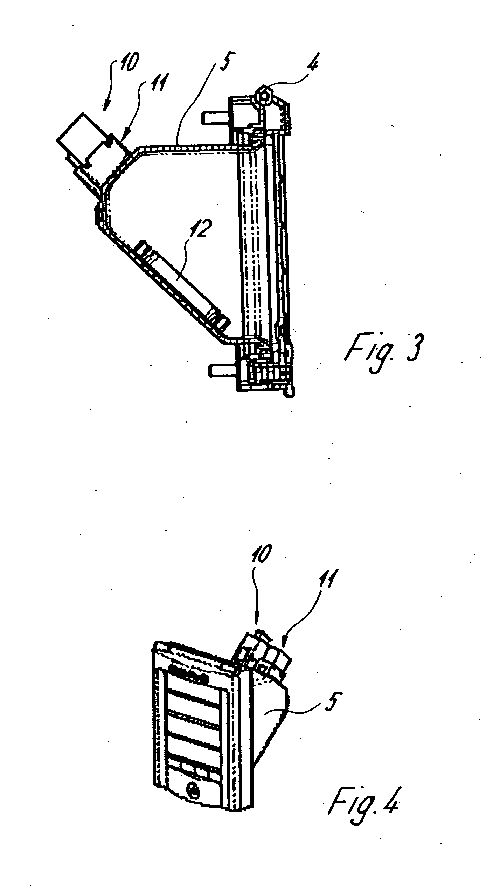

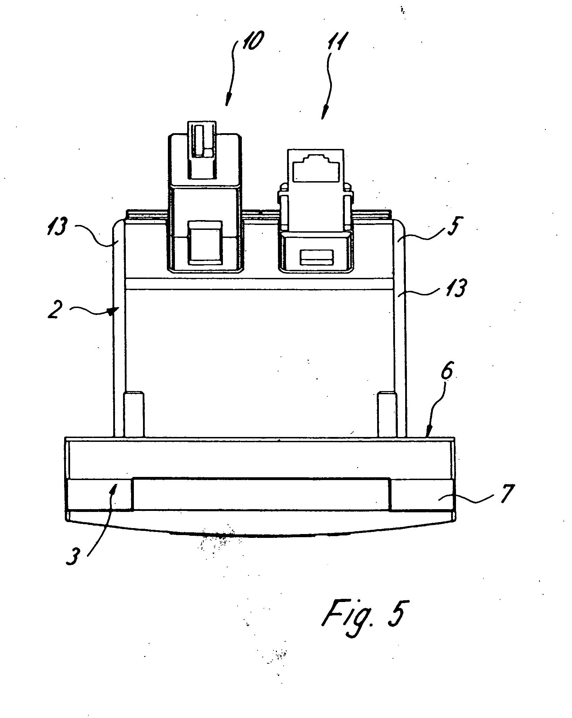

Der Gehäusegrundteil 2 weist eine wannenartige Vertiefung 5 auf, die ringsum von einem Flanschabschnitt 6 umgeben ist - siehe Fig.2 bis 5 - , auf dem der Deckelteil 3 in seinem äußeren Umfangsbereich 7 ebenfalls flanschartig flächig aufliegt.

In dem Flanschabschnitt 6 - oder im korrespondierenden äußeren Umfangsbereich 7 - ist eine Ringnut 18 ausgebildet, in welche ein Dichtring 19 eingesetzt ist, der das Schnittstellengehäuse 1 im geschlossenen Zustand zwischen dem Flanschabschnitt 6 und dem Umfangsbereich 7 abdichtet (hier nicht zu erkennen).

Der Flanschabschnitt 6 dient daneben auch zur Montage des Schnittstellengehäuses 1 in einer Ausnehmung einer Wandung, z.B. einer Tür eines Schaltschrankes oder dgl.. Die Montage des Schnittstellengehäuses 1 erfolgt hier beispielhaft mittels mehrerer Schrauben 8, welche den Flanschabschnitt 6 durchsetzen.

Ein Schloss 9 zwischen Gehäusegrundteil 2 und Deckelteil 3 sichert das Schnittstellengehäuses 1 gegen ein unbefugtes Öffnen.

Im Bereich der Vertiefung weist das Schnittstellengehäuse mehrere Durchbrüche auf, in welche jeweils in abgedichteter Art wenigstens ein oder mehrere Stecker- oder Buchsenteile 10 - 12 eingesetzt sind.

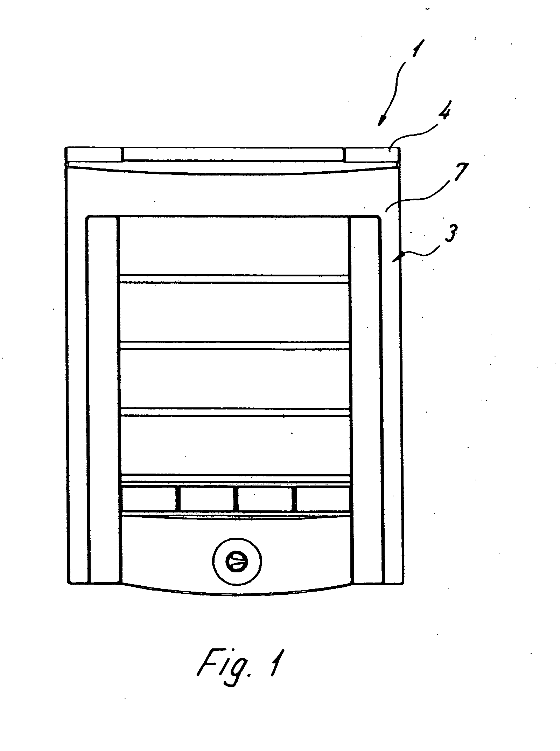

Dabei weist die Vertiefung 5 wenigstens eine, hier zwei Wandungen 14, 15 auf, die nicht im rechten Winkel zur Flansch- und Deckelteilebene ausgerichtet sind, die durch die Flanschebene definiert ist sondern in einem spitzen Winkel α kleiner 90°, insbesondere in einem Winkel zwischen 30 und 60° zu dieser Ebene. Die übrigen Wandungen 13 liegen hier rechtwinklig oder parallel zur Ebene der Fig. 1.

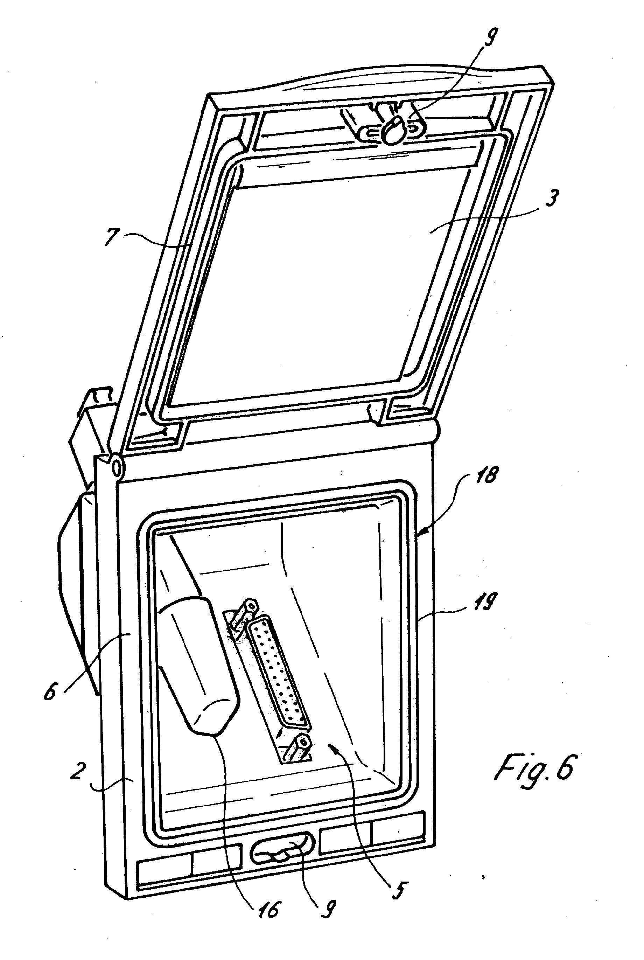

Aufgrund der "schräg" ausgerichteten Wandungen 14, 15 können Stecker oder Anschlussadapter wie Memorysticks 16 - Fig. 6 - besonders raumsparend in der Vertiefung 5 untergebracht werden, ohne das der maximale Tiefe relativ zum Flanschabschnitt der Tiefe der Stecker- oder Buchsenteile oder des Memorysticks 16 entsprechen muss.

Das Schnittstellengehäuse 1 ermöglicht es, auch ohne ein Öffnen eines Schaltschrankes bzw. der Wandung, in welche das Schnittstellengehäuse 1 eingesetzt ist, an die Stecker- oder Buchsenteile 10 - 12 Gegenstecker- oder Buchsenteile oder sonstige Einrichtungen wie die dargestellten Memorysticks 16 anzuschließen und derart Programmierungen, Prüfungen und dgl. einer in den Schaltschrank oder die Maschine integrierten Steuerung vorzunehmen.

Ein besonderer Vorteil besteht darin, dass Schnittstellengehäuse einfach und kostengünstig in abgedichteter Bauart realisierbar ist, wobei auch höhere Schutzklassen wie IP67 erfüllt werden können.

Das Schnittstellengehäuse besteht bevorzugt aus einem festen und robusten Kunststoff, wobei insbesondere das Deckelteil auch transparent gestaltbar ist, um den Blick auf das Innere des Schnittstellengehäuses freizugeben, ohne dass dieses geöffnet werden muss.

An den spitzwinklig ausgerichteten Wandungen 14, 15 sind verschiedenste Steckerteile anbringbar, so vielpolige Stecker verschiedenster Bauart wie USB, RJ45, RS232, Centronics u.ä. Schnittstellen. Nach Fig. 1 sind die leitenden Elemente bzw. Metallteile der Stecker- oder Buchsenteile im Standard RJ 45 und USB direkt in eine der Wandungen 14, 15 integriert und vom Kunststoff in abgedichteter Art umgeben.

In dem Flanschabschnitt 6 sind hier schließlich noch mehrere Markierungsfelder 17 zum einfachen Anbringen von Markierern und dgl. ausgebildet.

### Bezugszeichen

- Schnittstellengehäuse: 1
- Gehäusegrundteil: 2
- Deckelteil: 3
- Scharnier: 4
- Vertiefung: 5
- Flanschabschnitt: 6
- Umfangsbereich: 7
- Schrauben: 8
- Schloss: 9
- Stecker oder Buchsenteile: 10 - 12
- Wandungen: 13, 14, 15
- Memorysticks: 16
- Markierungsfelder: 17
- Ringnut: 18
- Dichtring: 19

## Patentansprüche

1. Schnittstellengehäuse (1) mit
a) einem Gehäusegrundteil (2),
b) einem an dem Gehäusegrundteil (2) schwenkbar angeordneten Deckelteil (3),
c) einer wannenartigen Vertiefung (5) im Gehäusegrundteil (2) zur Aufnahme von Stecker- und/oder Buchsenteilen (10 -12) elektrischer Steckvorrichtungen, welche wenigstens eine Wandung der Vertiefung (5) durchsetzen,
**gekennzeichnet durch**
d) einen die wannenartige Vertiefung (5) ringsum umgebenden, ebenen Flanschabschnitt (6), auf dem das Deckelteil (3) in seinem äußeren Umfangsbereich (7) ebenfalls flanschartig flächig aufliegt,
e) wobei die Vertiefung (5) wenigstens eine oder mehrere Wandungen (14, 15) aufweist, die spitzwinklig in einem Winkel kleiner als 90° zur Flanschebene ausgerichtet sind und in die das wenigstens eine Stecker- und/oder Buchsenteil (10 -12) eingebracht ist.

2. Schnittstellengehäuse nach Anspruch 1, **dadurch gekennzeichnet, dass** die von den Stecker- und/oder Buchsenteil (10 -12) durchsetzten Wandungen (14, 15) in einem Winkel zwischen 30 und 60° zur Flanschebene ausgerichtet sind.

3. Schnittstellengehäuse nach Anspruch 1 oder 2, **dadurch gekennzeichnet, dass** die Vertiefung (5) zur Aufnahme eines Memorysticks (16) ausgelegt ist.

4. Schnittstellengehäuse nach Anspruch 1, 2 oder 3, **dadurch gekennzeichnet, dass** die Stecker- oder Buchsenteile im RJ45- und/oder USB-Standard ausgelegt sind.

5. Schnittstellengehäuse nach einem der vorstehenden Ansprüche, **dadurch gekennzeichnet, dass** es in abgedichteter Bauart hoher Schutzklasse ausgelegt ist.

6. Schnittstellengehäuse nach einem der vorstehenden Ansprüche, **dadurch gekennzeichnet, dass** in dem Flanschabschnitt (6) - oder im korrespondierenden äußeren Umfangsbereich (7) des Deckelabschnittes (2) - eine Ringnut (18) ausgebildet ist, in welche ein Dichtring (19) eingesetzt ist.

7. Schnittstellengehäuse nach einem der vorstehenden Ansprüche, **dadurch gekennzeichnet, dass** der Flanschabschnitt (6) zur Montage des Schnittstellengehäuses (1) in einer Ausnehmung einer Wandung, z.B. einer Tür eines Schaltschrankes oder dgl. ausgelegt ist.

8. Schnittstellengehäuse nach einem der vorstehenden Ansprüche, **dadurch gekennzeichnet, dass** ein Schloss (9) zwischen am Gehäusegrundteil (2) und am Deckelteil (3) ausgebildet ist.

9. Schnittstellengehäuse nach einem der vorstehenden Ansprüche, **dadurch gekennzeichnet, dass** das Deckelteil (3) transparent ausgebildet ist.
